(19) Europäisches Patentamt
European Patent Office
Office européen des brevets

(11) **EP 1 921 758 A1**

(12) **EUROPEAN PATENT APPLICATION**

(43) Date of publication:
**14.05.2008 Bulletin 2008/20**

(51) Int Cl.:
***H04B 1/707*** $^{(2006.01)}$    ***H04L 25/03*** $^{(2006.01)}$

(21) Application number: **06301143.1**

(22) Date of filing: **10.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **France Télécom**
**75015 Paris (FR)**

(72) Inventor: **BOCQUET, Wladimir**
**TOKYO Tokyo 135-0022 (JP)**

(54) **Radio receiving device and radio receiving method**

(57) To provide a radio receiving device receiving radio signals that minimizes the effects of interference.

In the radio receiving device, a transfer function unit estimates a frequency domain transfer function and a time domain transfer function based on a pilot symbol that is received by the antenna. A signal-to-interference noise ratio unit calculates a signal-to-interference noise ratio based on the estimated frequency domain transfer function and time domain transfer function for each information element of sequential N information elements that are included in the pilot symbol. A block size selection unit calculates among the N information elements a sequential range P with limited interference effects based on the calculated signal-to-interference noise ratio. A data receiving unit calculates a compensation value based on the value of P and the frequency domain transfer function estimated by the transfer function estimation unit and stores the compensation value, and, when the antenna receives a data symbol, calculates a received symbol consisting of the P infomiation elements based on the received data symbol and the compensation value that is stored in a storage region.

FIG. 3

EP 1 921 758 A1

**Description**

TECHNICAL FIELD

The present invention relates to a radio receiving device and a radio receiving method. More specifically, the present invention relates to a radio receiving device and a radio receiving method which are adaptable for inter-symbol-interference and inter-carrier-interference.

BACKGROUND ART

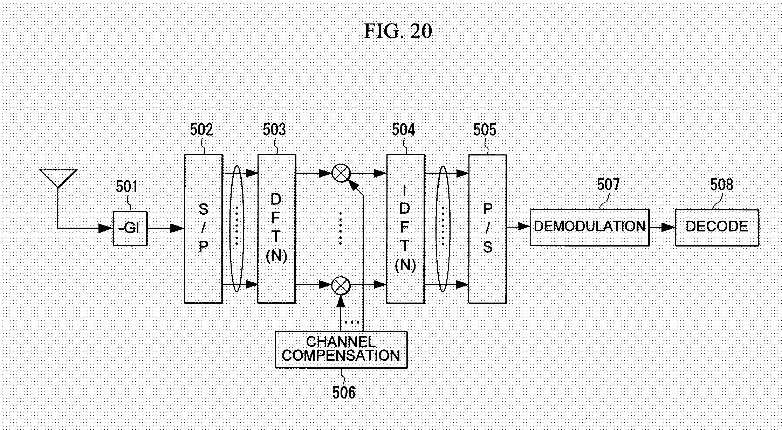

Conventionally, a single carrier (SC) system is used to a traditional digital transmission scheme in which data are transported as a fixed symbol rate serial stream of amplitude and/or phase modulated pulses. A linear frequency domain equalizer (FDE) performs receiver filtering in the frequency domain to minimize time domain inter symbol interference. Its function is the same as that of the time domain equalizer. However, for channels with severe delay spread, linear frequency domain equalizer is simpler in term of computation complexity because equalization is performed by block of data. The operations on this block are the Fourier transform, channel compensation and the inverse Fourier transform. In order to perform efficient equalization, a guard interval (GI) is added between each data block.

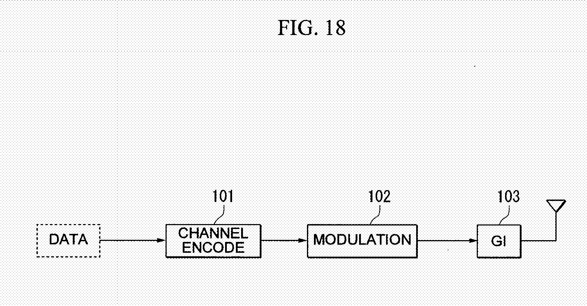

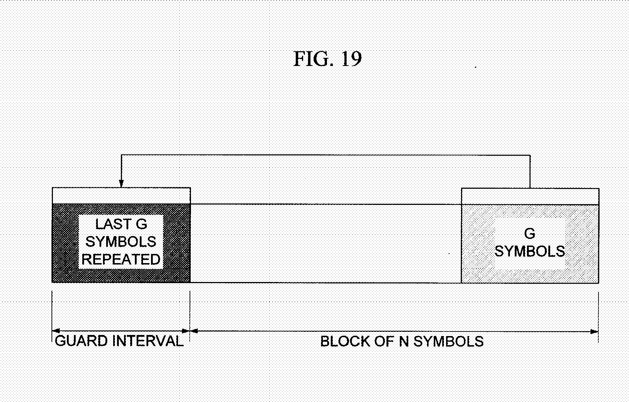

FIG. 18 summarizes the main steps of the transmit scheme. Transmit data are first encoded by the channel encode unit 101 and modulated to complex elements by the modulation unit 102. Then symbols are organized in blocks with length N. A cyclic prefix which is a copy of the last part of the transmitted block is included by a unit 103 as a header part of each block as shown in FIG. 19. The length of the cyclic prefix has to be longer than the maximum delay spread in order to completely avoid the inter symbol interference (ISI). The cyclic prefix at the beginning of each block has the following main functions: it prevents contamination of a block by ISI form the previous block and it makes the received block appear to be periodic with period N.
A conventional receiving scheme is presented in FIG. 20. At the receiving part, the cyclic prefix is discarded by the GI unit 501 and the serial-parallel converter 502 divides the output signal of the GI unit 501 for generating parallel signals each corresponding to a different received symbol. A fast Fourier transform (FFT) processing is performed on each block ofN data symbols by the discrete Fourier transform (DFT) unit 503. This FFT processing produces the appearance of circular convolution which is important for the FFT implementation. Then, channel distortion is compensated for each sub-carrier and the inverse DFT (IDFT) unit 504 returns the equalized signal to the time domain. The parallel-serial unit 505 combines the output signal of the inverse DFT unit 504 and converts it into a serial signal prior to demodulating by the demodulation unit 507 and decoding of data symbols by the decode unit 508. This is disclosed by H. Sari, G. Karam and I. Jeanclaude, "Frequency-Domain Equalization of Mobile Radio and Terrestrial Broadcast Channels", Proc. Globecom. 1994. San Francisco. Nov-Dec. 1994. pp.1-5.
Meanwhile, a time domain equalization is performed based on a rake receiver. The rake receiver is known as a radio receiver designed to counter the effects of multipath fading, which is done by using several "sub-receivers." Each sub-carrier is delayed slightly in order to tune in to the individual multipath components. Each component is decoded independently, but at a later stage combined in order to make the most use of the different transmission characteristics of each transmission path. This scheme of the rake receiver could very well result in higher signal-to-noise ratio (SNR) (or Eb/No) in a multipath environment than in a "clean" environment. The rake receiver is so named because of its analogous function to a garden rake, each finger collecting bits or symbol energy similarly to how tines on a rake collect leaves. Rake receivers are common in a wide variety of CDMA (Code Division Multiple Access) and W-CDMA (Wideband-CDMA) radio devices.
In the case of the rake receiver, however, the long delay spread directly affects the complexity of the receiver.
In the case of SC-FDE, however, the GI must be correctly allocated to completely mitigate the interference effects. In the presence of interference, the interference strongly affects the system performance.
The object of the present invention is to provide a radio receiving device that can minimize the effects of interference and can be readily constituted, and a radio receiving method.

DISCLOSURE OF THE INVENTION

In order to solve the aforementioned problems, the present invention is a radio receiving device that includes an antenna unit that receives a radio signal including a pilot symbol and a data symbol, a transfer function estimation unit that estimates a frequency domain transfer function and a time domain transfer function based on said received pilot symbol, a calculation unit which calculates information indicating the effects of interference based on the estimated frequency domain transfer function and time domain transfer function for each information element of sequential N information elements that are included in said pilot symbol, a block size selection unit that calculates, among said N information elements, a sequential range P with limited interference effects based on the calculated information indicating effects of interference, a data receiving unit that calculates a compensation value based on said sequential range P and the frequency domain transfer function estimated by said transfer function estimation unit and stores said compensation value, and, when said antenna receives a data symbol, calculates a received symbol consisting of the P information elements based on the received data symbol and said compensation value that is stored, a demodulation unit that demodulates said received symbol calculated by said data receiving unit; and a decoding unit that performs decoding based on said received symbol demodulated by said demodulation unit.

It is to be understood that the reference numerals appended in the claims do not limit the interpretation of the claims.

BRIEF DESCRIPTION OF THE DRAWINGS

FIG. 1 is a schematic block diagram of the radio transmitting system according to the present invention.
FIG. 2 is a diagram for explaining the principle of the present invention.
FIG. 3 is a schematic block diagram of the radio receiving device according to the first embodiment.
FIG. 4 is a drawing showing the constitution of a received frame according to the first embodiment.
FIG. 5 is a drawing showing the constitution of a decision unit according to the first embodiment.
FIG. 6 is a drawing showing the relation between window length and block size according to the first embodiment.
FIG. 7 is a drawing for explaining the relation between SINR and BER and the block size detection method according to the first embodiment.
FIG. 8 is a drawing showing the simulation result for BER corresponding to a change in N in the first embodiment.
FIG. 9 is a drawing showing the simulation result for BER corresponding to a change in P in the first embodiment.
FIG. 10 is a drawing showing the simulation result for BER corresponding to a channel variation in the first embodiment.
FIG. 11 is a drawing showing another embodiment of the data receiving unit.
FIG. 12 is a drawing showing another embodiment of the data receiving unit.
FIG. 13 is a schematic block diagram of the radio receiving device according to the second embodiment.
FIG. 14 is a drawing showing the constitution of a received frame according to the second embodiment.
FIG. 15 is a schematic block diagram of the radio transmitting system according to the third embodiment.
FIG. 16 is a drawing showing the simulation result for BER in the case of N = 128 and a channel variation in the third embodiment.
FIG. 17 is a drawing showing a simulation result of the third embodiment.
FIG. 18 is a schematic block diagram showing the constitution of a radio transmitting device according to the prior art.
FIG. 19 is a drawing showing the constitution of a transmitted frame according to the prior art.
FIG. 20 is a schematic block diagram showing the constitution of a radio receiving device according to the prior art.

BEST MODE FOR CARRYING OUT THE INVENTION

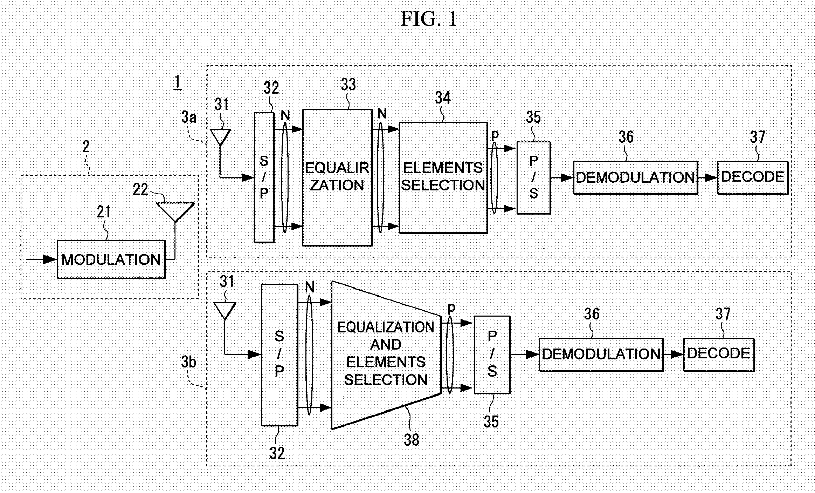

The principle of the present invention shall first be explained. FIG. 1 is a schematic block diagram showing a radio communication system 1 in which a single-carrier-based overlap frequency domain equalization (SC-OFDE) system, which is the principle of the present invention, is applied. Radio communication system 1 is provided with a combination of a radio transmitting device 2 and a radio receiving device 3a or a combination of a radio transmitting device 2 and a radio receiving device 3b.

In the radio transmitting device 2, a modulation unit 21 modulates transmission data by a modulation scheme such as Quadrature Phase-shift Keying (QPSK) or Quadrature Amplitude Modulation (QAM), and outputs a plurality of information elements that are expressed in bit strings after modulation. An antenna unit 22 transmits the modulated transmission data by a radio signal.

In the radio receiving device 3 a, an antenna unit 31 receives the radio signal from the radio transmitting device 2. A serial-parallel converter 32 performs parallel conversion on data received by the antenna 31 for each information element (hereinafter information elements are also referred to elements) modulated by the modulation unit 21, and outputs the converted data as a received symbol consisting of N information elements. Here, a complex number expressed by bit strings modulated by the modulation unit 21 is contained in each of the information elements. An equalization unit 33 performs equalization on the received symbols that are input. An element selection unit 34 selects symbols consisting of P information elements with limited interference effects from the received symbols consisting of the N information symbols that are input. A demodulation unit 36 performs demodulation of the received symbols consisting of the P information elements that are input. A decoding unit 37 decodes the output from the demodulation unit 36.

The radio receiving device 3b is provided with an equalization and element selection unit 38 that performs equalization on the received symbols that are input and selects symbols consisting of P information elements with limited interference effects from the received symbols consisting of the N information symbols. The function of the equalization and element selection unit 38 unifies the functions of the equalization unit 33 and the element selection unit 34 of the radio receiving device 3a. The other constitutions of the receiving device 3b are the same as those of the radio receiving device 3a.

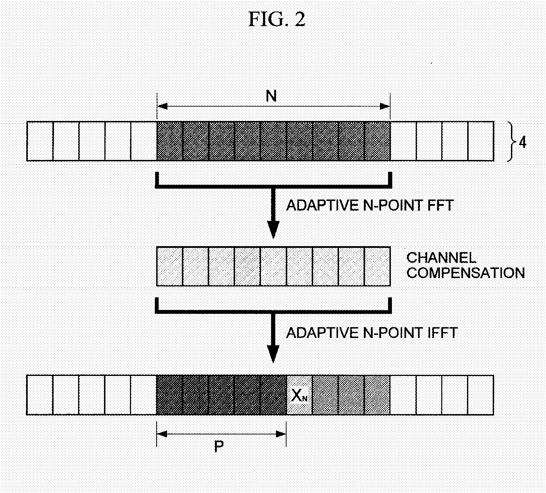

Next, referring to FIG. 2, the principle of the proposed method performed by the radio receiving device 3a and the radio receiving device 3b of the radio communication system 1 shall be explained.

[Channel model]

In the radio communication system 1, assuming that the propagation channel consists of M discrete paths having different amplitudes and time delays, its base-band impulse response is represented as the following formula (F1).

$$h^{(u)}(t,\tau) = \sum_{m=0}^{M-1} \alpha_m^{(u)}(t)\, \delta\,(\tau - \tau_m^{(u)}) \qquad\qquad (F1)$$

where $\alpha_m^{(u)}$ is the complex channel gain of the $m$-th discrete path for the u-th active user and $\tau_m^{(u)}$ is the time delay of the $m$-th discrete path for the $u$-th active user. Furthermore, it is assumed that the total channel power is equal to 1. It is also assumed that coherent detection and perfect timing are performed.

[Transmission sequence]

$s_m$ denotes the m-th modulated symbol which is transmitted during one frame. It is assumed that a frame is composed by $N_d$ data symbols and $N_p$ pilot symbols. Pilot symbols are necessary to estimate the channel variations. $N_{frame}$ denotes the total number of symbols per frame (i.e. $N_{frame} = N_d + N_p$).

[Proposed principle]

As shown in FIG. 2, the concept of the proposed method consists of performing pseudo frequency domain equalization which is processed by the equalization unit 33 and the element selection unit 34 in the radio receiving device 3a and the equalization and element selection unit 38 in the radio receiving device 3b. The principle is to extract the appropriate consecutive elements which are denoted as N length from the plurality of consecutive received frames 4 and then perform N-point FFT on the extracted N length elements. The next step of the proposed equalization allows compensation of the channel variations on each element of the output of the FFT. Then, N-point IFFT is performed on the N elements and one element, denoted $\hat{x}_p$ with $0 \le p < N,$ is extracted. This equalization scheme is applied on the $N_d$ elements.

In order to realize the proposed method, the following are necessity: firstly two main parameters N and P need to be carefully estimated; secondly the proposed method consists of first estimating the channel variation and then adjusting the two parameters by simply performing the proposed equalization scheme on the well-known sequence; and thirdly a first impression shows that N strongly depends on the modulation (QPSK, QAM).

Next, the mathematical description of the proposed method in this embodiment shall be described in detail. The received signal is written as the following formula (F2).

$$\vec{r} = \vec{h} \otimes \vec{s} + \vec{n} \qquad\qquad (F2)$$

where $\bar{r}$, $\bar{h}$, and $\bar{n}$ are, respectively, the received signal, the vector representation of the channel, and the additive white Gaussian noise (AWGN) vector representation.

According to Fig. 18, the equalization scheme closely approximates the SC-FDE system without GIs. The equalization is processed by the equalization unit 33 or the equalization and the element selection unit 38 is represented as the following formula (F3).

$$y_k = \frac{1}{\sqrt{N}} \sum_{m=0}^{N-1} r_m \, e^{-j\frac{2\pi}{N}.m.k} \qquad \text{(F3)}$$

For $0 \le k < N$.

Here, it is defined that $\overline{G} = (g_k)_{0 \le k < N}$ denotes the N-point frequency domain representation of the channel compensation without any interference, i.e. G = 1/FFT(h)$_N$. Thus, output of the channel compensation is represented as the following formula (F4).

$$z_k = g_k \, y_k \quad \forall \, 0 \le k < N \qquad \text{(F4)}$$

The last part of the proposed equalization scheme consists of performing the N-point inverse FFT on the equalized signal $z_k$ and then one specific element defined by the index p is picked up by the element section unit 34 or the equalization and element selection unit 38. Output of the p-th element of the element section unit 34 or the equalization and element selection unit 38 is described by the following formula (F5).

$$\hat{x}_p = \frac{1}{\sqrt{N}} \sum_{k=0}^{N-1} z_k \, e^{j\frac{2\pi}{N}p.k} \qquad \text{(F5)}$$

After combining formula (F3) and formula (F4) into formula (F5), $\hat{x}_p$ is obtained as the following formula (F6) or (F7).

$$\hat{x}_p = \frac{1}{N} \sum_{k=0}^{N-1} \sum_{m=0}^{N-1} g_k \, r_m \, e^{-j\frac{2\pi}{N}(m-p).k} \qquad \text{(F6)}$$

$$\hat{x}_p = \sum_{m=0}^{N-1} \left( \frac{1}{N} \sum_{k=0}^{N-1} g_k e^{-j\frac{2\pi}{N}(m-p).k} \right) r_m \qquad \text{(F7)}$$

$\hat{x}_p$ is also described by the following formula (F8).

$$\hat{x}_p = \sum_{m=0}^{N-1} w_m^{(p)} \, r_m \qquad \text{(F8)}$$

where:

$$w_m^{(p)} = \frac{1}{N} \sum_{k=0}^{N-1} g_k \, e^{-j\frac{2\pi}{N}(m-p).k} \qquad \text{(F9)}$$

For each data element of the transmit frame, the element section unit 34 or the equalization and element selection unit 38 estimates $\hat{x}_p$ and outputs $\hat{x}_p$ into the demodulation unit 36 through a parallel-serial converter 35.

**EP 1 921 758 A1**

[First Embodiment]

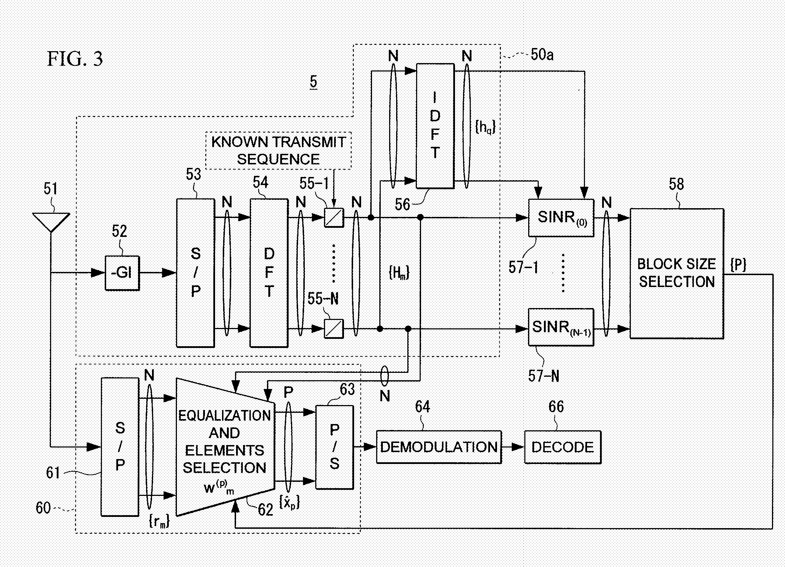

The first embodiment of the present invention shall next be described referring to the attached drawings. FIG. 3 is a block diagram showing the constitution of a radio receiving device 5 according to the first embodiment of the present invention. The ellipse figures in FIG. 3 indicate that connection lines equal to the number of the letter corresponding to the ellipse are contained in the ellipse. For example, if "N" appears on an ellipse, then N connection lines are present, and if "P" appears on an ellipse, then P connection lines are present.

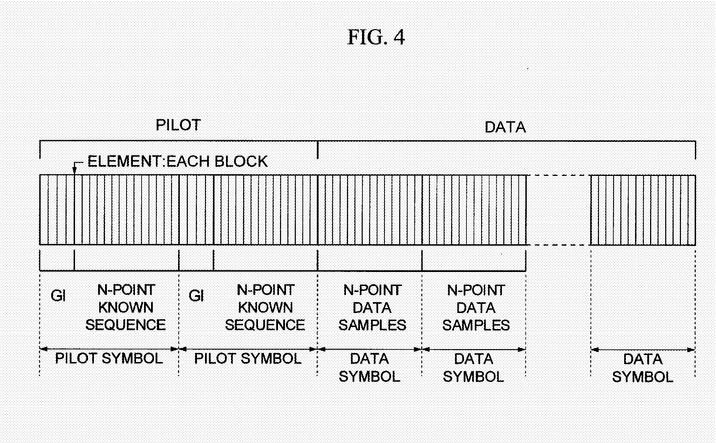

In the radio receiving device 5, an antenna unit 51 receives a radio signal that has a frame constituted by a pilot information region and a data region as shown in FIG. 4. In the pilot information region, Np pilot symbols with GI are set, and in the data region, $N_d$ data symbols are set. $N_{frame}$, the total number of symbols per frame, is thus $N_{frame}= N_d+N_p$. In the frame of FIG. 4, in order to avoid ISI in channel estimation, pilot symbols are formed in the state of the GI added. The transfer function estimation unit 50a estimates a time domain transfer function ($h_q$) and a frequency domain transfer function ($H_m$). In the transfer function estimation unit 50a, the pilot symbol that is contained in the pilot information region of the radio signal frame received by the antenna unit 51 is input to a GI unit 52, where the guard interval is removed from the pilot symbol. The pilot symbol with the removed guard interval is then input to a serial-parallel unit 53. The serial-parallel unit 53 rearranges the input pilot symbols with the guard interval removed in parallel form for each information element and outputs them as received symbols consisting of N information elements. A DFT unit 54 performs the discrete Fourier transform (DFT) on the received symbols input from the serial-parallel unit 53, specifically performing the fast Fourier transform, for conversion to frequency domain received symbols. The output from the DFT unit 54 and a known symbol sequence stored in advance that is transmitted by the sending side are input to calculation units 55-1 to 55-N, which calculate the frequency domain transfer function $H_m$ based on the input information. Also, the calculation units 55-1 to 55-N output the calculated frequency domain transfer function $H_m$ to the inverse discrete Fourier transform (IDFT) unit 56, signal-to-interference and noise ratio (SINR) units 57-1 to 57-N, and equalization and element selection unit 62. The IDFT unit 56 performs the inverse discrete Fourier transform on the frequency domain transfer function $H_m$, specifically performing the inverse fast Fourier transform for conversion to the time domain transfer function $h_q$. The SINR units 57-1 to 57-N calculate N SINR (SINR (0) to SINR (N-1)) based on the frequency domain transfer function ($H_m$) and the time domain transfer function ($h_q$). A block size selection unit 58 calculates the value of P that indicates the aforementioned range of P information elements with limited interference effects based on N SINR of SINR (0) to SINR (N-1) input from the SINR units 57-1 to 57-N and an algorithm to be described below.

In a data receiving unit 60, data symbols contained in the data region of the radio signal frame received by the antenna unit 51 are input to a serial-parallel converter unit 61, which rearranges the data symbols in parallel form for each information element, and outputs them as received symbols $r_m$ consisting ofN information elements. An equalization and element selection unit 62 calculates $g_k$ as $G=1/(H_m)_N$ from the frequency domain transfer function $H_m$ based on the output value from the calculations units 55-1 to 55-N. Also, the equalization and element selection unit 62 performs calculations accompanying the fast Fourier transform based on the aforementioned formula (F9) and based on P output from the block size selection unit 58 and $g_k$ to calculate a compensation value $w_m^{(p)}$. Also, when the received symbol $r_m$ consisting of N information elements is input from the serial-parallel converter unit 61, an equalization and elements selection unit 62 performs the calculation of the aforementioned formula (F8) using the calculated compensation value $w_m^{(p)}$, and calculates the received symbol $\hat{x}_p$ consisting of P information elements with limited interference effects. A parallel-serial unit 63 converts the received symbols consisting of P information elements to serial data and outputs the data. A demodulation unit 64 performs demodulation of the received symbols consisting of the input P elements. A decoding unit 66 performs decoding on the output from the demodulation unit 64.

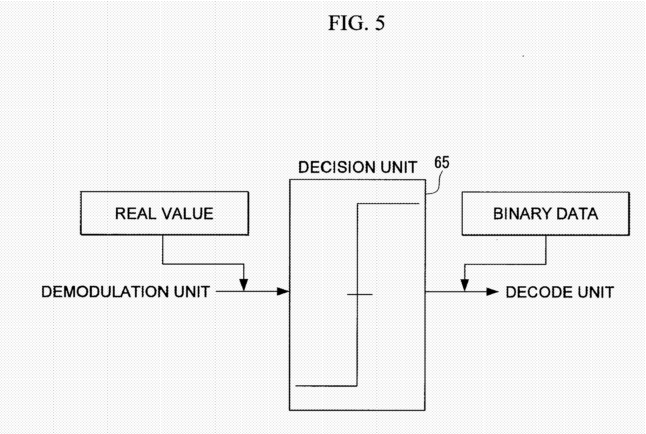

As shown in FIG. 5, a decision unit 65 is disposed between the demodulation unit 64 and the decoding unit 66, and a real value that is output from the demodulation unit 64 may be constituted so as to be output as binary data.

Also, the decoding system that is applied to the decoding unit 66 is determined based on a combination with the encoding method performed at the sending side. For example, in the case of the encoding unit employing the convolutional coding system, the Viterbi decoding system is applied in the decoding unit 66. In the case of the encoding unit employing the Turbo coding system, the MAP-based algorithm system is applied in the decoding unit 66. In the case of the LDPC coding system being employed in the encoding unit, the iterative process system is applied in the decoding unit 66.

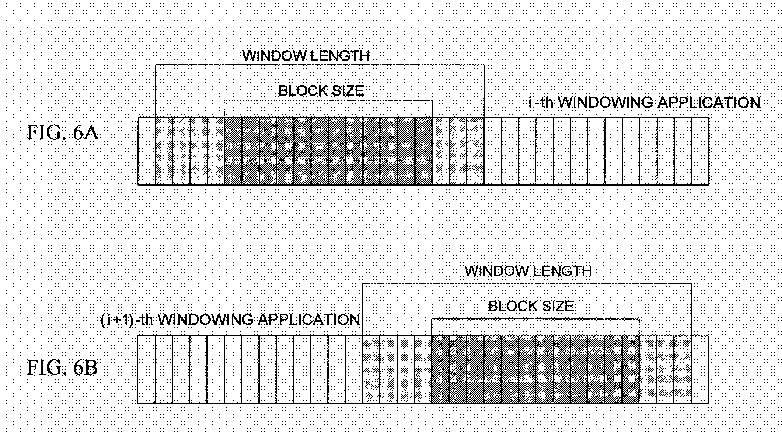

Next, the process of computing P by the aforementioned block size selection unit 58 shall be described. FIG. 6A and FIG 6B show the general principle of the frame processing the block size and the window length selection for the proposed detection scheme. In FIG. 6A and FIG 6B, the window length is N and the block size is P.

FIG. 6A shows the i-th windowing application, and FIG. 6B shows the (i+1)-th windowing application. The block size is selected so that there is no overlapping in the i-th and (i+1)-th. Herein below, selection of the appropriate window

6

length N and the detection process of the block size P shall be explained.

[Adaptive process to automatically select the appropriate window to perform equalization and detection]

The block size selection unit 58 calculates the adaptation of the window and the block sizes based on the estimated SINR(0) to SINR(N-1) by the SINR unit 57-1 to 57-N. In the time domain, the ISI is represented by the following formula (F10).

$$r_{i,m}^{ISI} = \sum_{q=1}^{Q-1} \sum_{m=0}^{\delta_q-1} h_q \, s_{i-1,N-\delta_q+m} \qquad (F10)$$

In the time domain, the inter carrier interference (ICI) is represented by the following formula (F11).

$$r_{i,m}^{ICI} = \sum_{q=1}^{Q-1} \sum_{m=0}^{\delta_q-1} h_q \, s_{i,N-\delta_q+m} \qquad (F11)$$

The frequency domain, representation of the received signal with interference is written as the following formula (F12).

$$Y_{i,k} = H_k \, X_{i,k} + \frac{1}{\sqrt{N}} \sum_{q=1}^{Q-1} \sum_{m=0}^{\delta_q-1} h_q \, x_{i-1,N-\delta_q+m} \, e^{-j\frac{2\pi}{N}k\,m}$$
$$- \frac{1}{\sqrt{N}} \sum_{q=1}^{Q-1} \sum_{m=0}^{\delta_q-1} h_q \, x_{i,N-\delta_q+m} \, e^{-j\frac{2\pi}{N}k\,m} + N_{i,k} \qquad (F12)$$

The equalization scheme is written as the following formula (F13) or (F14)

$$Z_{i,k} = G_k \, Y_{i,k} \qquad (F13)$$

$$Z_{i,k} = G_k \, H_k \, X_{i,k} + G_k \frac{1}{\sqrt{N}} \sum_{q=1}^{Q-1} \sum_{m=0}^{\delta_q-1} h_q \, x_{i-1,N-\delta_q+m} \, e^{-j\frac{2\pi}{N}k\,m}$$
$$- G_k \frac{1}{\sqrt{N}} \sum_{q=1}^{Q-1} \sum_{m=0}^{\delta_q-1} h_q \, x_{i,N-\delta_q+m} \, e^{-j\frac{2\pi}{N}k\,m} + G_k \, N_{i,k} \qquad (F14)$$

In time domain, $Z_{i,k}$ is written as the following formula (F15).

$$z_{i,p} = \frac{1}{\sqrt{N}} \sum_{k=0}^{N-1} Z_{i,k} \; e^{j\frac{2\pi}{N}k\,p} \tag{F15}$$

In the time domain, the output of the equalization for the p-th element is written as the following formula (F16).

$$\begin{aligned} z_{i,p} = &\frac{1}{\sqrt{N}} \sum_{k=0}^{N-1} G_k \, H_k \, X_{i,k} \; e^{j\frac{2\pi}{N}k\,p} \\ &+ G_k \frac{1}{N} \sum_{k=0}^{N-1} \sum_{q=1}^{Q-1} \sum_{m=0}^{\delta_q-1} h_q \, x_{i-1,N-\delta_q+m} \; e^{-j\frac{2\pi}{N}k\,(m-p)} \\ &- G_k \frac{1}{N} \sum_{k=0}^{N-1} \sum_{q=1}^{Q-1} \sum_{m=0}^{\delta_q-1} h_q \, x_{i,N-\delta_q+m} \; e^{-j\frac{2\pi}{N}k\,(m-p)} \\ &+ \frac{1}{\sqrt{N}} \sum_{k=0}^{N-1} G_k \, N_{i,k} \; e^{j\frac{2\pi}{N}k\,p} \end{aligned} \tag{F16}$$

Then, the estimation of the SIR for the p-th element is written as the following formula (F17).

$$SIR_p = \frac{P_S}{2\,P_S \left| \dfrac{1}{N} \displaystyle\sum_{k=0}^{N-1} \dfrac{1}{H_k} \displaystyle\sum_{q=1}^{Q-1} \displaystyle\sum_{m=0}^{\delta_q-1} h_q \; e^{-j\frac{2\pi}{N}k(m-p)} \right|^2} \tag{F17}$$

And, the estimation of the SINR for the p-th element is written as the following formula (F18).

$$SINR_p = \frac{P_S}{2\,P_S \left| \dfrac{1}{N} \displaystyle\sum_{k=0}^{N-1} \dfrac{1}{H_k} \displaystyle\sum_{q=1}^{Q-1} \displaystyle\sum_{m=0}^{\delta_q-1} h_q \; e^{-j\frac{2\pi}{N}k(m-p)} \right|^2 + \dfrac{\sigma_n^2}{N} \left| \displaystyle\sum_{k=0}^{N-1} \displaystyle\sum_{m=0}^{N-1} G_k \; e^{-j\frac{2\pi}{N}k(m-p)} \right|^2} \tag{F18}$$

In formula (F18), the numerator Ps is the signal power value of a received signal, and the first item of the denominator of formula (F18) is based on a signal power value of the received signal influenced by interference. Also, the second item of the denominator of formula (F18) is based on signal power values of a noise signal. As shown in formula (F18), the SINR units 57-1 to 57-N can compute SINR based on the time domain transfer function ($h_q$), a frequency domain transfer function ($H_m$), $G_k$, and $\sigma_n^2$, where $\sigma_n^2$ is a variance of the noise signals.

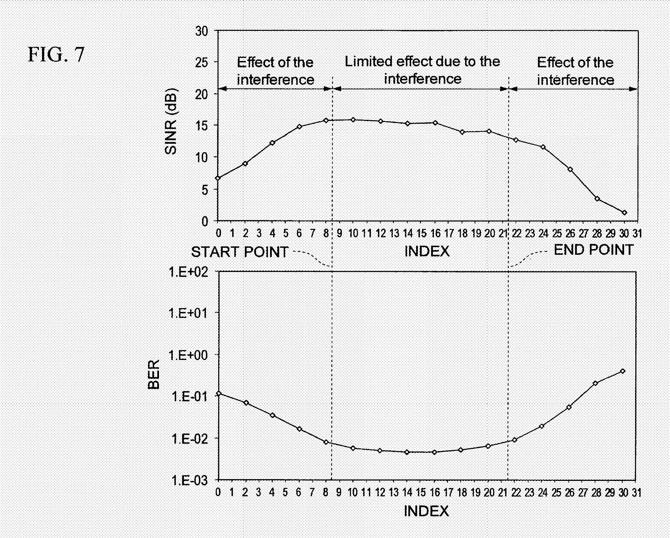

As shown in FIG. 7, the SINR which described in the previous equations and the BER are linked and used to estimate both the window length and the block size in the function of the SINR. The window selection is based on the equation of the SINR and the coefficients for the equalization. There are two different ways to set up the window including the useful elements. These two ways are done by estimating the part strongly affected by the interference.

[First method of window setup]

Due to the properties of the Fourier transforms, the header and ended part are strongly affected by the interference as shown in FIG. 7. In that case, the block size selection unit 58 executes the following algorithm.

First, the block size selection unit 58 sets the SINR in the case of p = 0 input from SINR unit 57-1 is 0 (also

**EP 1 921 758 A1**

called SINR$_0$ or SINR(0)), and performs judgment based on formula (F19) below when p = 1.

$$\left| SINR_p - SINR_{p-1} \right|^2 < \varepsilon \qquad\qquad (F19)$$

Judgment with formula (F19) is repeatedly performed by incrementing the value of p by one each until the formula (F19) above is satisfied. When formula (F19) is satisfied, the value of p serves as the start point of the range of the block size P. Processing based on formula (F19) can determine changes shown by the square of the absolute value of the SINR difference sequentially from front (p = 0) to the back (the direction of increasing p) on the index axis of FIG. 7 and can detect p in which a variation is less than a certain value $\varepsilon$ as the start point in the block size P.
Next, in order to detect the end point of the block size P range, the block size selection unit 58 sets SINR in the case of p = N-1 input from the SINR unit 57-N (also called SINR$_{N-1}$ or NINR(N-1)), and performs judgment based on formula (F20) below as p = N-1.

$$\left| SINR_p - SINR_{p-1} \right|^2 < \varepsilon \qquad\qquad (F20)$$

Judgment with formula (F20) is repeatedly performed by decrementing the value of p by 1 each until the formula (F20) above is satisfied. When formula (F20) is satisfied, the value of p serves as the end point of the range of the block size P. Processing based on formula (F20) can determine changes shown by the square of the absolute value of the SINR difference sequentially from the other end (p = N-1) to the one end (the direction of decreasing p) on the index axis of FIG. 7 and can detect p in which a variation is less than a certain value E as the end point in the block size P.

[Second method of window setup]

Due to the properties of the Fourier transforms, the central part is relatively less affected by the interference as shown in FIG. 7. In that case, the block size selection unit 58 executes the following algorithm.
First, the block size selection unit 58 sets the SINR in the case of N/2 input from the SINR unit 57-(N/2-1) (also called SINR$_{N/2}$ or SINR(N/2)), and performs judgment based on formula (F21) below with p = 1.

$$\left| SINR_{N/2-p} - SINR_{N/2-p-1} \right|^2 > \varepsilon \qquad\qquad (F21)$$

Judgment with formula (F21) is repeatedly performed by incrementing the value of p by one each until the formula (F21) above is satisfied. When formula (F21) is satisfied, the value of p serves as the start point of the range of the block size P. Processing based on formula (F21) can determine changes shown by the square of the absolute value of the SINR difference sequentially from the middle (N/2) to the front on the index axis of FIG. 7 and can detect N/2-p in which a variation is greater than a certain value $\varepsilon$ as the start point in the block size P.
Next, in order to detect the end point of the block size P range, the block size selection unit 58 sets SINR in the case of N/2 input from the SINR unit 57-(N/2-1) (also called SINR$_{N/2}$ or NINR(N/2)), and performs judgment based on formula (F22) below as p=1.

$$\left| SINR_{p+\frac{N}{2}} - SINR_{p+1+\frac{N}{2}} \right|^2 > \varepsilon \qquad\qquad (F22)$$

Judgment with formula (F22) is repeatedly performed by incrementing the value ofp by 1 each until the formula (F22) above is satisfied. When formula (F22) is satisfied, the value of N/2-p serves as the end point of the range of the block size P. Processing based on formula (F22) can determine changes shown by the square of the absolute value of the SINR difference sequentially from the middle (N/2) to the back on the index axis of FIG. 7 and can detect N/2-p in which a variation is greater than a certain value $\varepsilon$ as the end point in the block size P.
In terms of $\varepsilon$ which is used in the above first method of window setup and the second method of window setup,

9

ε is calculated as following. The largest SINR is estimated through N selected elements. Then the BER is estimated based on the estimated largest SINR, because the BER is a direct function of the SINR. The acceptable bit error rate is calculated based on the estimated BER depending on the system of the receiving device. Generally, a 1, 2, or 3% error rate will be accepted. Then the ε is determined based on the acceptable error rate.

[Simulation results]

Hereinafter, the results of verifying the proposed equalization method are shown in the case of five paths with 1 dB decay and in the case that maximum delay is equal to four elements. QPSK modulation is used for simulation and any fading is not included. In addition, it is assumed that the channel is perfectly known at the receiver part for any N.

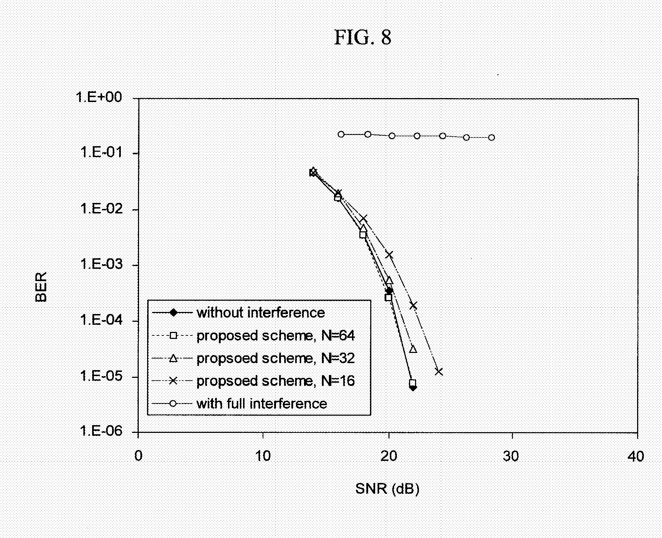

FIG. 8 shows the performance simulation for different values ofN as proposed schemes and represents the BER versus the SNR in dB. Simulation conditions are as follows: Rayleigh fading channel model with 10 significant paths. Transmission is performed without any channel coding through QPSK modulation. The plot without interference means that GI is added every N symbol. The plot denoted with full interference means that conventional processing is performed at the receiving part but the frame structure does not include any GI. The proposed schemes do not include any GI with the proposed window selection and the equalization being performed. Performance strongly depends on the value of N. However, for significant values ofN, the BER is identical to the conventional scheme (i.e., SC-FDE). That means the interference effect is completely removed by simply performing the proposed scheme. For example, in the case of N=16, some limited degradation occurs. However, considering the comparison of the proposed scheme with the conventional scheme, it denotes that any GI estimation insertion is not necessary in the proposed scheme in FIG. 8.

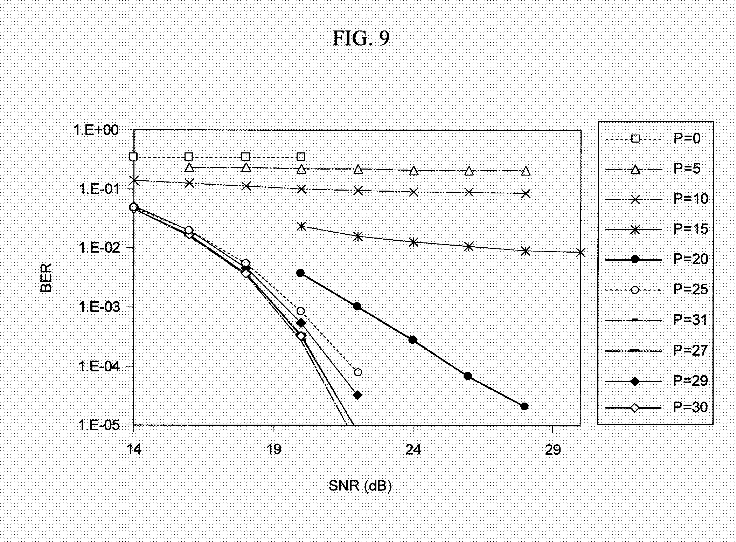

FIG. 9 shows the impact of the block size P on the BER performance in the case ofN = 32. Fig. 9 denotes the BER versus the SNR in some sample of block size P. It is highlighted through these simulation results that P should not be set up between N/2 and N.

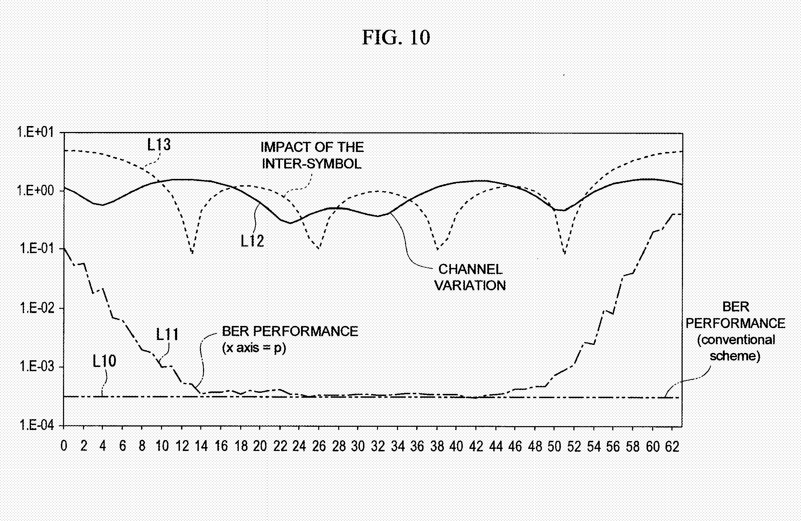

FIG. 10 shows the impact of the channel on the performance of the bit error rate (BER) in the function of the processed element in the frequency domain. For the information, line 10 denotes the performance of the single carrier frequency domain equalization (SC-FDE) with guard interval as a conventional scheme. Line 11 denotes the performance of the single carrier frequency domain equalization (SC-FDE) without a guard interval as a proposed scheme. Fig. 10 clearly highlights the impact of the ISI on the BER performance. Line 12 denotes the channel variation of both the conventional scheme and the proposed scheme. The line 13 denotes the impact of the inter-symbol-interference of both the conventional scheme and the proposed scheme. The ISI part as line 13 in the time domain representation is always placed at the beginning of the frame. That means border effects strongly affect the BER performance. Between the sub-carrier index 14 and 44, the performance of the proposed scheme is quite identical. From the simulation results presented in FIG. 10, it is highlighted that a certain subset of sub-carrier can be combined in order to reduce the equalizer complexity.

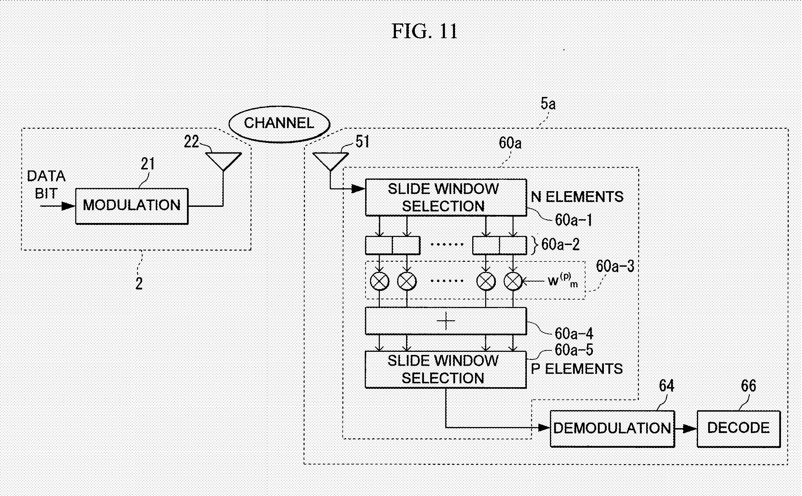

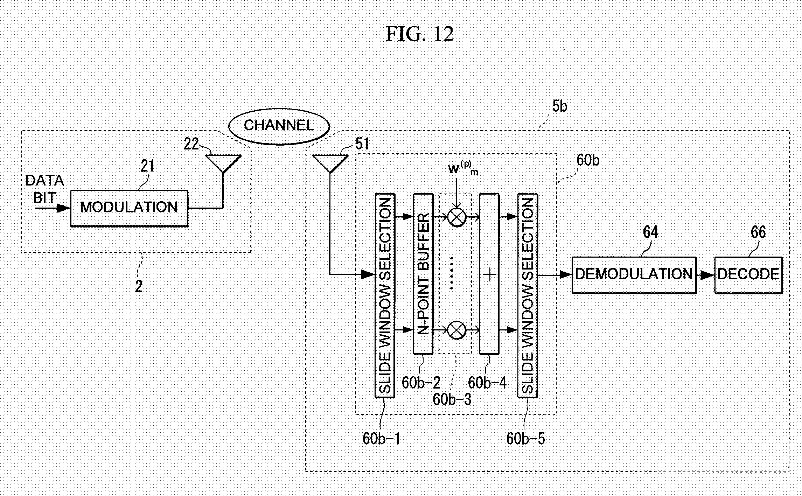

The data receiving unit 60 may be constituted as the data receiving unit 60a, 60b of the radio receiving device 5a, 5b as shown in FIG. 11 and FIG. 12, respectively. These two schemes shown in FIG. 11 and 12 are identical but the representation is modified. FIG. 11 and FIG. 12 also show the radio transmitting device 2 which includes the proposed equalization method. In FIG. 11, the slide window selection unit 60a-1 selects the N size window as the input of the equalizer part and inputs selected N elements into the shift register unit 60a-2. The output of every register and $w_m^{(p)}$ are input into each multiplier 60a-3. A slide window selection unit 60a-5 selects the P elements after the output of the adder 60a-4, which adds the output of every multiplier 60a-3. In next step after finishing the calculation of the first N elements, the slide window selection unit 60a-1 shifts the N size window according to FIG. 6A, FIG. 6B and the process is repeated. FIG. 12 shows another constitution of the data receiving unit. In FIG. 12, the data receiving unit 60b has the same performance as the data receiving unit 60a. The difference between the data receiving unit 60a and the data receiving unit 60b is that the data receiving unit 60b uses the N-point buffer unit 60b-2 wherein N symbols arrive together at a same time instead of the shift register unit 60a-2 wherein symbols arrive sequentially. The other components 60b-1, 60b-3, 60b-4 and 60b-5 of the data receiving unit 60b are each similar respectively to the selection unit 60a-1, the multiplier 60a-3, the adder 60a-4 and the slide window selection unit 60a-5 of the data receiving unit 60a.

[Second Embodiment]

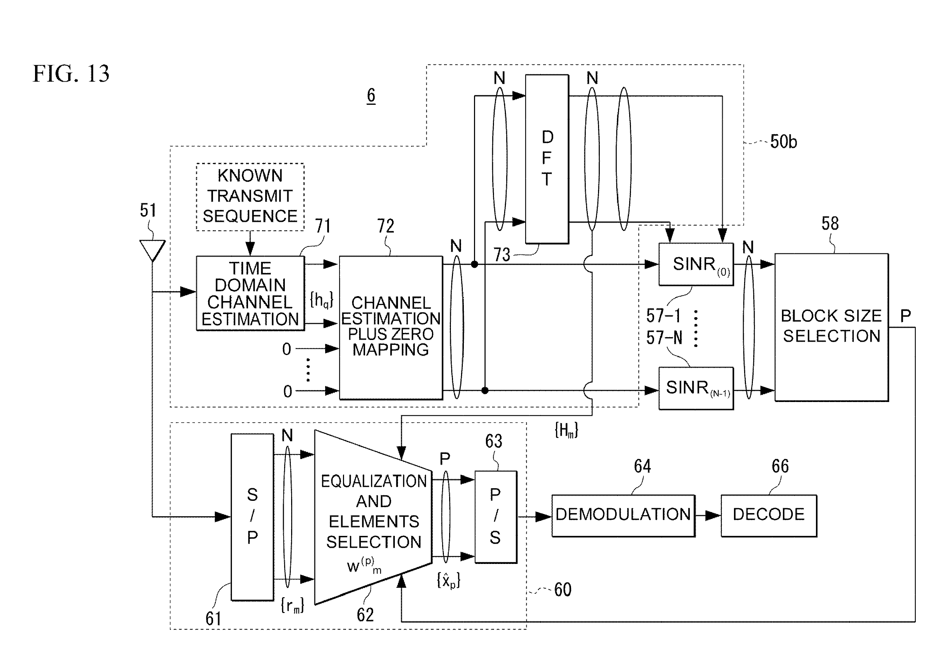

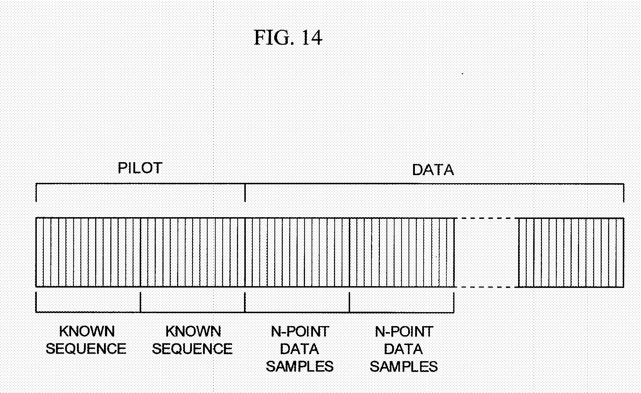

FIG. 13 is a block diagram showing the constitution of a radio receiving device 6 according to a second embodiment of the present invention. In the radio receiving device 6 according to the second embodiment, the antenna unit 51 receives radio signals that have a frame constituted by a pilot information region and a data region as shown in FIG. 14. In the frame, in contrast to the first embodiment, Np pilot symbols are set. A difference with the radio receiving device 5 of the first embodiment is also in the constitution of a transfer function estimation unit 50b. Other components are given the same reference numerals as those in the first embodiment. The constitution of the transfer function estimation unit 50b shall be described below.

The transfer function estimation unit 50b, similarly to the transfer function estimation unit 50a of the first embodiment, estimates a time domain transfer function ($h_q$) and a frequency domain transfer function ($H_m$). In the transfer function estimation unit 50b, a time domain channel estimation unit 71 estimates the time domain transfer function ($h_q$) based on a pilot symbol that is received by the antenna unit 51 and a known symbol sequence stored in advance that is transmitted by the sending side. A channel estimation plus zero mapping unit 72 outputs anew the time domain transfer function ($h_q$) consisting of N values by mapping zero to the time domain transfer function ($h_q$) estimated by the time domain channel estimation unit 71 so that the number of values of the time domain transfer function ($h_q$) becomes N. A DFT unit 73 performs the discrete Fourier transform on the time domain transfer function ($h_q$) consisting of N values output from the channel estimation plus zero mapping unit 72, and outputs the frequency domain transfer function ($H_m$). The SINR units 57-1 to 57-N and the block size selection unit 58, performing identical processing as the constitution of the first embodiment, calculate a value of P that indicates the aforementioned range of P information elements with limited interference effects.

Also in the second embodiment, the data receiving unit 60 may be constituted as the data receiving unit 60a, 60b of the radio receiving device 5a, 5b as shown in FIG. 11 and FIG. 12, respectively.

[Third Embodiment]

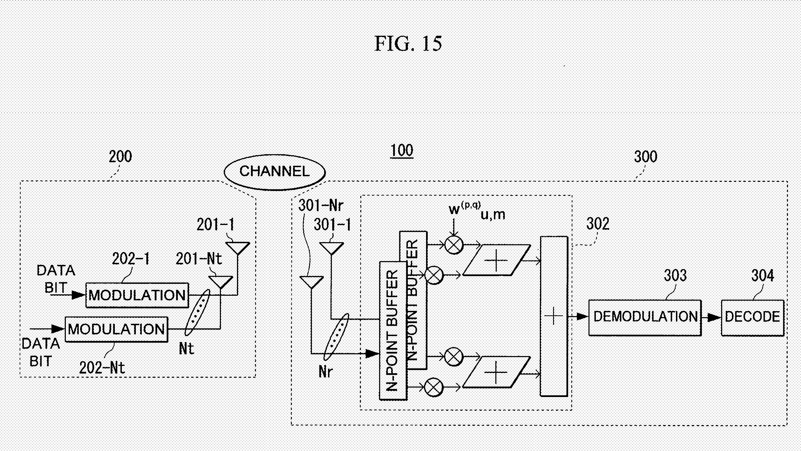

FIG. 15 is a drawing showing a radio communication system 100 of the multiple input-multiple output (MIMO) transmission method according to the third embodiment of the present invention. The radio communication system 100 is provided with a radio transmitting device 200 and a radio receiving device 300. The radio transmitting device 200 is provided with Nt antennas 201-1 to 201-Nt and Nt modulation units 202-1 to 202-Nt. The radio receiving device 300 is provided with a plurality of antennas 301-1 to 301-Nr, data receiving unit 302, demodulation unit 303, and decoding unit 304.

As shown in FIG. 15, a double summation, in the N-point frequency domain and in the space domain, is performed to recover the initial transmission sequence. In the case of the MIMO transmission method, the signal model is represented as the following formula (F23).

$$y_k^{(q)} = \frac{1}{\sqrt{N}} \sum_{m=0}^{N-1} r_m^{(q)} \, e^{-j\frac{2\pi}{N}.m.k} \quad \forall 0 \le k < N \qquad (\text{F23})$$

where $r_m^{(q)}$ is the m-th symbol in the buffer sequence on the q-th receiving antenna 301-q of the radio receiving device 300.

$$\vec{G} = (g_k^{(q,p)})_{\substack{0 \le k < N \\ 0 \le p < Nr \\ 0 \le q < Nt}}$$

is denoted as the N-point frequency domain representation of the channel compensation without any interference, i.e., G=(FFT(h)$_N$)$^{-1}$ between the q-th receiving antenna 301-q of the radio receiving device 300 and the p-t transmitting antenna 201-p of the radio transmitting device 200.

In this case, the output of the channel compensation is represented as the following formula (F24).

$$z_k^{(p)} = \sum_{q=0}^{Nr-1} g_k^{(p,q)} \, y_k \quad \forall \, 0 \le k < N \qquad (\text{F24})$$

The last part of the proposed equalization method consists of performing the N-point inverse FFT on the equalized signal $z_k^{(p)}$ and then one specific element, which is defined by the index u, is picked up.

The output of the u-th element of the data receiving unit 302 of the radio receiving device 300 is described as the following formula (F25).

$$\hat{x}_u^{(p)} = \frac{1}{\sqrt{N}} \sum_{k=0}^{N-1} z_k^{(p)} \, e^{j\frac{2\pi}{N}u.k} \qquad (F25)$$

After combining (F23) and (F24) into (F25), $\hat{x}_u^{(p)}$ is obtained as the following formula (F26) or (F27).

$$\hat{x}_u^{(p)} = \frac{1}{N} \sum_{k=0}^{N-1} \sum_{m=0}^{N-1} \sum_{q=0}^{Nr-1} g_k^{(p,q)} \, r_m^{(q)} \, e^{-j\frac{2\pi}{N}(m-u).k} \qquad (F26)$$

Or:

$$\hat{x}_u^{(p)} = \sum_{m=0}^{N-1} \sum_{q=0}^{Nr-1} \left( \frac{1}{N} \sum_{k=0}^{N-1} g_k^{(p,q)} \, e^{-j\frac{2\pi}{N}(m-u).k} \right) r_m^{(q)} \qquad (F27)$$

$\hat{x}_u^{(p)}$ is also described by following formula (F28).

$$\hat{x}_u^{(p)} = \sum_{m=0}^{N-1} \sum_{q=0}^{Nr-1} w_{u,m}^{(p,q)} \, r_m^{(q)} \qquad (F28)$$

Where:

$$w_{u,m}^{(p,q)} = \frac{1}{N} \sum_{k=0}^{N-1} g_k^{(p,q)} \, e^{-j\frac{2\pi}{N}(m-u).k} \qquad (F29)$$

For each data element and spatial data stream of the transmit frames, $\hat{x}_u^{(p)}$ is output from the data receiving unit 302 and these elements are sent through the demodulation unit 303.

[Simulation results]

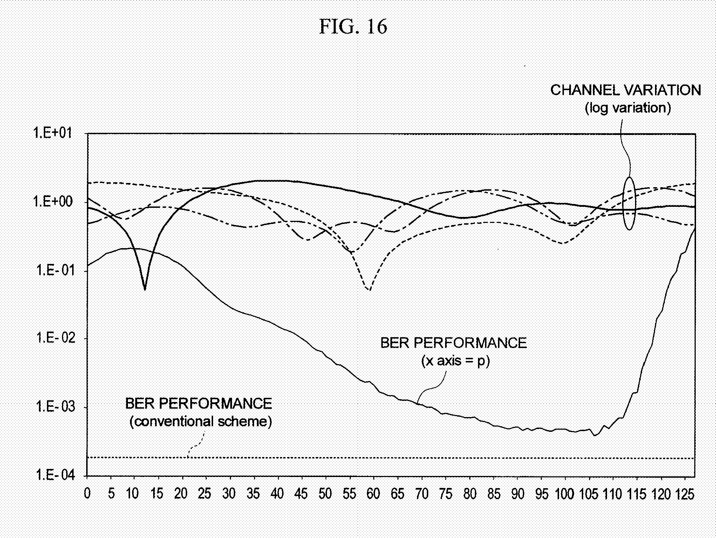

FIG. 16 shows the performance results for different sub-carrier allocation (denoted u) in the case of N = 128. For reference, BER performance with the conventional scheme is added and performances are shown for SNR=25dB. In addition, the log values of the 4 different channels (2x2) are also presented. It is observed that the value of u (index of the output of the data receiving unit 302) strongly affects the BER performance. The best result is obtained for u = 106 and N = 128. In the case of u = 106 the proposed equalization scheme exhibits similar performance to the conventional scheme, even though the proposed equalization scheme is a relatively low complexity system compared with the conventional scheme which includes GI and the proposed equalization scheme.

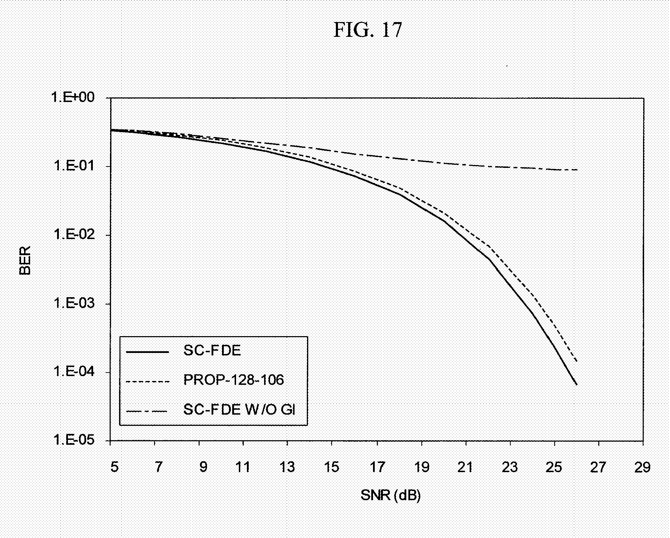

FIG. 17 shows the performance simulations for the proposed scheme, the conventional SC-FDE with GI according to the solid line and the SC-FDE without GI according to the dot-and-dash line. For the proposed scheme according to the dashed line (equalizer without any guard interval), parameters are equal to N=128 and u=106. Compared to the conventional scheme without GI, the proposed scheme strongly outperforms it. Compared to the conventional scheme with GI, BER performances are similar in spite of the constitution without GI. The GI insertion reduces the spectral efficiency of the receiving device. In addition, if there is not any feedback regarding the channel variations, it is necessary to roughly estimate the GI value. Generally, the value is fixed to 20 or 25% of the symbol duration.

According to the constitution of the embodiments above, the radio receiving device according to the present invention enables selection of the window length including useful elements with limited interference effects based on the pilot symbol and detection of the block size corresponding to the useful elements. Also, the radio receiving device enables equalizing only one symbol using windowing. Thereby, the radio receiving device reduces complexity and limits performance degradation. Also, the radio receiving device can obtain the output of the equalization in the time domain. In addition, the radio receiving device has the effect of few performance variations for a certain number of elements. Also, the radio receiving device has the effect of the possibility of optimizing the selecting window length. Also, the present invention enables minimizing the effect of inter-symbol-interference and inter-carrier-interference with a constitution only at the receiving side.

Also, data which indicate effects of the ISI and ICI or which are derived from effects such as the power of the interference, the associate BER, and the like can be used to estimate the window in the present invention in place of the SINR as explained in the embodiments.

The present invention has been illustrated and explained referring to the above-mentioned preferred embodiments. However, as understood by a person skilled in this field, modifications and improvements can be made as long as they do not depart from the scope of the present invention.

INDUSTRIAL APPLICABILITY

The present invention can be used to prevent the single carrier radio communication system from being affected by interference.

**Claims**

1. A radio receiving device comprising:

   an antenna unit (51) that receives a radio signal including a pilot symbol and a data symbol;
   a transfer function estimation unit (50a, 50b) that estimates a frequency domain transfer function and a time domain transfer function based on said received pilot symbol;
   a calculation unit (57-1 to 57-N) which calculates information indicating the effects of interference based on the estimated frequency domain transfer function and time domain transfer function for each information element of sequential N information elements that are included in said pilot symbol;
   a block size selection unit (58) that calculates, among said N information elements, a sequential range P with limited interference effects based on the calculated information indicating effects of interference;
   a data receiving unit (60, 60a, 60b) that calculates a compensation value based on said sequential range P and the frequency domain transfer function estimated by said transfer function estimation unit and stores said compensation value, and, when said antenna receives a data symbol, calculates a received symbol consisting of the P information elements based on the received data symbol and said compensation value that is stored;
   a demodulation unit (64) that demodulates said received symbol calculated by said data receiving unit; and
   a decoding unit (66) that performs decoding based on said received symbol demodulated by said demodulation unit.

2. The radio receiving device according to claim 1, **characterized by** said block size selection unit calculating the difference between adjacent information elements according to an arrangement order of said N information elements with respect to the values of said information indicating the effects of interference for each information element calculated by said calculation unit, and calculating a sequential range P with limited interference effects within the range of said N information elements.

3. The radio receiving device according to claim 1, **characterized by** said block size selection unit calculating the difference between adjacent information elements in an ascending order or a descending order of an arrangement in which a middle information element in the arrangement order of said N information elements is made the starting point with respect to the values of said information indicating the effects of interference for each information element calculated by said calculation unit, and based on a threshold value with the calculated difference calculating a sequential range P with limited interference effects within the range of said N information elements.

4. The radio receiving device according to claim 1, **characterized by**:

said pilot symbol being constituted for each ofN information elements, or constituted with a guard interval added for each ofN information elements; and

said transfer function estimation unit, in the case of a guard interval added to said pilot symbol, removing said guard interval and estimating a frequency domain transfer function and a time domain transfer function based on said received pilot symbol; and in the case of said pilot symbol being constituted for each ofN information elements, estimating a frequency domain transfer function and a time domain transfer function based on said received pilot symbol.

5. The radio receiving device according to claim 1, **characterized by** performing the multiple input-multiple output reception in which a plurality of said antennas are provided.

6. A radio receiving method in a radio receiving device provided with an antenna, consisting of the following steps:

receiving a radio signal including a pilot symbol and a data symbol by said antenna;

estimating a frequency domain transfer function and a time domain transfer function based on said received pilot symbol;

calculating information indicating the effects of interference based on the estimated frequency domain transfer function and time domain transfer function for each information element of sequential N information elements that are included in said pilot symbol;

calculating among said N information elements a sequential range P with limited interference effects based on the calculated information indicating the effects of interference;

calculating a compensation value based on said sequential range P and the frequency domain transfer function estimated by said transfer function estimation unit and storing said compensation value, and, when said antenna receives a data symbol, calculating a received symbol consisting of the P information elements based on the received data symbol and said compensation value that is stored in a storage region;

demodulating the received symbol that is calculated; and

performing decoding based on said received symbol that is demodulated.

7. The radio receiving method according to claim 6, **characterized by** calculating the difference between adjacent information elements according to an arrangement order of said N information elements with respect to the values of said information indicating the effects of interference for each information element, and calculating a sequential range P with little interference effects within the range of said N information elements.

8. The radio receiving method according to claim 6, **characterized by** calculating the difference between adjacent information elements in an ascending order or a descending order of an arrangement in which a middle information element in the arrangement order of said N information elements is made the starting point with respect to the values of said information indicating the effects of interference for each information element, and based on a threshold value with the calculated difference calculating a sequential range P with little interference effects within the range of said N information elements.

9. The radio receiving method according to claim 6, **characterized by**:

said pilot symbol being constituted for each ofN information elements, or constituted with a guard interval added for each of N information elements; and

said transfer function estimation unit, in the case of a guard interval added to said pilot symbol, removing said guard interval and estimating a frequency domain transfer function and a time domain transfer function based on said received pilot symbol; and in the case of said pilot symbol being constituted for each of N information elements, estimating a frequency domain transfer function and a time domain transfer function based on said received pilot symbol.

10. The radio receiving method according to claim 6, **characterized by** performing a multiple input-multiple output reception in which a plurality of said antennas are provided.

EP 1 921 758 A1

FIG. 1

FIG. 2

N

ADAPTIVE N-POINT FFT

CHANNEL
COMPENSATION

ADAPTIVE N-POINT IFFT

$X_N$

P

FIG. 3

5

KNOWN TRANSMIT SEQUENCE

50a

N — N

I D F T   $\{h_q\}$

51

52  -GI

53  S/P   N

54  D F T   N

55-1   N

55-N

N   $\{H_m\}$

56

57-1   SINR$_{(0)}$   N

57-N   SINR$_{(N-1)}$

58   BLOCK SIZE SELECTION   $\{P\}$

60

61   S/P   N

$\{r_m\}$

EQUALIZATION AND ELEMENTS SELECTION   $w^{(p)}_m$

62

N

P

63   P/S   $\{\hat{x}_p\}$

64   DEMODULATION

66   DECODE

17

FIG. 4

PILOT                           DATA

ELEMENT:EACH BLOCK

| GI | N-POINT KNOWN SEQUENCE | GI | N-POINT KNOWN SEQUENCE | N-POINT DATA SAMPLES | N-POINT DATA SAMPLES | | DATA SYMBOL |
|----|----|----|----|----|----|----|----|
| PILOT SYMBOL | | PILOT SYMBOL | | DATA SYMBOL | DATA SYMBOL | | |

EP 1 921 758 A1

FIG. 5

EP 1 921 758 A1

FIG. 6A

WINDOW LENGTH

BLOCK SIZE

i-th WINDOWING APPLICATION

FIG. 6B

(i+1)-th WINDOWING APPLICATION

WINDOW LENGTH

BLOCK SIZE

FIG. 7

EP 1 921 758 A1

FIG. 8

EP 1 921 758 A1

FIG. 9

EP 1 921 758 A1

EP 1 921 758 A1

FIG. 10

## FIG. 11

CHANNEL

DATA BIT → MODULATION (21) → (22)

[2]

(51) → SLIDE WINDOW SELECTION  N ELEMENTS (60a-1)

(60a)

(60a-2)

$\otimes$ $\otimes$ ...... $\otimes$ $\otimes$ ← $w^{(p)}_m$  (60a-3)

$+$  (60a-4)

SLIDE WINDOW SELECTION  P ELEMENTS (60a-5)

→ DEMODULATION (64) → DECODE (66)

(5a)

EP 1 921 758 A1

FIG. 12

FIG. 13

EP 1 921 758 A1

FIG. 14

FIG. 15

FIG. 16

CHANNEL VARIATION
(log variation)

BER PERFORMANCE
(x axis = p)

BER PERFORMANCE
(conventional scheme)

EP 1 921 758 A1

FIG. 17

FIG. 18

DATA → CHANNEL ENCODE (101) → MODULATION (102) → GI (103) → antenna

FIG. 19

LAST G SYMBOLS REPEATED

G SYMBOLS

GUARD INTERVAL

BLOCK OF N SYMBOLS

EP 1 921 758 A1

FIG. 20

European Patent Office

**EUROPEAN SEARCH REPORT**

Application Number

EP 06 30 1143

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | N. SHARMA, A TIKKU: "Is the cyclic prefix necessary?" 2006 IEEE INTERNATIONAL SYMPOSIUM ON INFORMATION THEORY, SEATTLE , USA, 9 July 2006 (2006-07-09), - 12 July 2006 (2006-07-12) pages 128-132, XP002442385 Piscataway, USA Page 128, left-hand col., section I, 3rd paragraph; Page 129-131, sections C and D. ----- | 1-10 | INV. H04B1/707 H04L25/03 |
| A | WO 2006/020657 A (TEXAS INSTRUMENTS INC [US]; DABAK ANAND G [US]; ONGGOSANUSI EKO N [US]) 23 February 2006 (2006-02-23) * paragraph [0015]; figures 2,3 * ----- | 1-10 | |
| A | US 2004/213339 A1 (SMEE JOHN E [US] ET AL) 28 October 2004 (2004-10-28) * paragraph [0008]; figure 5 * ----- | 1,6 | |

TECHNICAL FIELDS SEARCHED (IPC)

H04L

The present search report has been drawn up for all claims

| Place of search | Date of completion of the search | Examiner |
|---|---|---|
| Munich | 13 July 2007 | Snell, Timothy |

EPO FORM 1503 03.82 (P04C01)

**ANNEX TO THE EUROPEAN SEARCH REPORT
ON EUROPEAN PATENT APPLICATION NO.**

EP 06 30 1143

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2007

| Patent document cited in search report | | Publication date | Patent family member(s) | | Publication date |
|---|---|---|---|---|---|
| WO 2006020657 | A | 23-02-2006 | US | 2006029144 A1 | 09-02-2006 |
| US 2004213339 | A1 | 28-10-2004 | CN | 1778083 A | 24-05-2006 |
| | | | MX | PA05011433 A | 12-12-2005 |
| | | | WO | 2004098138 A1 | 11-11-2004 |

EPO FORM P0459

For more details about this annex : see Official Journal of the European Patent Office, No. 12/82

**REFERENCES CITED IN THE DESCRIPTION**

**Non-patent literature cited in the description**

- **H. SARI ; G. KARAM ; I. JEANCLAUDE.** Frequency-Domain Equalization of Mobile Radio and Terrestrial Broadcast Channels. *Proc. Globecom. 1994,* November 1994, 1-5